# EUROPEAN PATENT SPECIFICATION

(11) **EP 3 529 850 B1**
(45) Date of publication and mention of the grant of the patent: **24.06.2020**
(21) Application number: 16785436.3
(22) Date of filing: 20.10.2016
(51) Int. Cl.: H01M 10/625, H01G 11/04, H01G 11/08, H01M 10/615, H01M 10/663, H01M 10/6572, B60L 1/02, B60L 58/27, H01G 11/18

(54) **ENERGY STORAGE DEVICES AND METHODS FOR CONTROLLING AN ENERGY STORAGE DEVICE**
ENERGIESPEICHERVORRICHTUNGEN UND VERFAHREN ZUR STEUERUNG EINER ENERGIESPEICHERVORRICHTUNG
DISPOSITIFS D'ACCUMULATION D'ÉNERGIE ET PROCÉDÉS DE COMMANDE D'UN DISPOSITIF D'ACCUMULATION D'ÉNERGIE

(43) Date of publication of application: 28.08.2019
(73) Proprietor: Robert Bosch GmbH, 70442 Stuttgart (DE)
(72) Inventor: DONOTEK, Michael, 71679 Asperg (DE); WANG, Grace, Singapore 559538 (SG)
(86) International application number: PCT/EP2016/075174
(87) International publication number: WO 2018/072829

(56) References cited:
- DE-A1- 3 807 633
- JP-A- 2008 108 509
- US-A1- 2016 268 058

## Description

### Technical Field

The present invention relates to energy storage devices and methods for controlling an energy storage device.

### Background

Energy storage devices such as supercapacitors, hybrid supercapacitors (HSC) or electric double layer capacitors (EDLC) generally do not work well when they are cold. Many attempts have been made to overcome the problems associated with a cold energy storage device such as warming up the device or attempting approaches to re-design the devices so that they can work despite being cold.

Some of these attempts are not so successful or are expensive, or make the entire system heavier than they should otherwise be. The problem with energy storage devices not working well when they are cold is evident when a car will not start in cold weather conditions. Also, when the energy storage device is cold, the internal resistance is high and the energy storage device cannot be charged well, so that the energy storage device cannot store energy efficiently. This may particularly be the case in hybrid electric vehicles, where regenerative braking is employed and energy is stored in a rechargeable battery. When the energy storage device is cold, it cannot be charged well and cannot store well the energy from regenerative braking.

Some hybrid vehicles are known to have almost zero recuperation capability when cold, which means that the driver cannot benefit from energy recuperation for at least the first few kilometers or miles of driving in the cold. Car manufacturers have long attempted to overcome this problem, but until now the problems have not been resolved. Several approaches include reheating the energy storage source using an additional heating element or making the energy storage housing arbitrarily large.

Prior-art attempts to produce heat to batteries in cars include JP 2008 035581 A to Toyota Motor Corp. (14 February 2008), US 6072301 A to Ashtiani et al. (6 June 2000), and US 5990661 A to Ashtiani et al. (23 November 1999). US 6072301 A proposes an inductor together with a film type capacitor as a resonant circuit serving as the source of circulating high frequency (i.e., 25 kHz) current through the battery to effect self heating. Subsequent experience has shown, however, that exposing the battery to 25 kHz current at any significant amplitude causes damage to the battery. US 5990661 A proposes injecting high frequency current to self heat a battery by warming the electrolyte because of internal power dissipation within the electrolyte. It will be understood that the current is at a high frequency, for example when considering that the inductor mentioned in the patent has a physical size that is (necessarily) proportional to 1/f. If one were to attempt to employ the circuitry of the patent at, for example, one-tenth of the nominal frequency of 25 kHz, this would be 2.5 kHz. But this would require that the inductor are ten times larger than originally contemplated. If one were to attempt to employ the circuitry of the patent at a sub-Hertz frequency, the inductor would probably weigh almost as much as the automobile itself. It will thus be appreciated that the current flows proposed by this document are indeed at a high frequency. Such an approach (injection of HF (high frequency) currents into a battery) was perhaps not recognized at the time as being detrimental to the battery. Subsequent experience, however, has shown that such a heating approach gives rise to electrode exfoliation and electrolyte breakdown by high frequency friction. Accelerated aging of the electrode-electrolyte is a consequence. Neither of these high frequency approaches has been placed into actual use with actual commercial products, presumably due in part to the gradual appreciation that it can age the battery.

JP 2008 035581 A describes a power supply used to quickly raise the temperature of a hybrid vehicle battery pack. In its approach, Toyota recommends using a relay to switch a resistor across the pack to generate heat to warm the cells. Toyota's system comprises a DC (direct current)-DC power converter to interface the NiMH battery to the traction drive electronics. Toyota takes every precaution to minimize high frequency ripple current exposure to the battery by designing the DC-link on this electronics to have at least three different electrolytic and film capacitor filtering elements so that high frequency ripple current leakage to the battery is minimized. This may be taken as an indication of the gradual appreciation within the relevant art that it is better to avoid passing high frequency current through the battery. It will be appreciated that the I²R heat (in other words: Joule heat, or ohmic heat, or resistive heat; it will be understood that I stands for current and R for resistance) developed in the resistor may not all go into the battery, and the heat that does go into the battery may heat some parts of the battery more than other parts.

US2014328659 discloses a battery container for battery temperature control with a housing including an enclosure for receiving a battery, wherein at least a portion of the housing comprises a thermal insulation material for insulating the interior of the enclosure against ambient temperature. The battery container further comprises a temperature control element disposed within the enclosure, wherein the temperature control element reduces the rate of heat transfer between the ambient and the interior of the enclosure. The temperature control element comprises an active temperature control element. The battery container further comprises a controller that in response to a signal indicating battery temperature, controls the active temperature control element for reducing the rate of heat transfer between the ambient and the interior of the enclosure.

US2010112419 discloses a device for controlling the temperature of batteries for electric vehicles. The device includes a thermoelectric semiconductor unit, a thermoelectric semiconductor unit, a temperature sensor, and a battery controller. The thermoelectric semiconductor unit is configured such that a portion thereof is exposed in a battery tray. The thermoelectric semiconductor unit controller causes the thermoelectric semiconductor unit to radiate heat, and causes the thermoelectric semiconductor unit to absorb heat. The temperature sensor detects and outputs the temperature of the battery tray. The battery controller outputs the heat radiating control signal to the thermoelectric semiconductor unit controller when the temperature detected by the temperature sensor is lower than a predetermined value, and outputting the heat absorbing control signal to the thermoelectric semiconductor unit controller when the temperature detected by the temperature is equal to or higher than the predetermined value.

It has been demonstrated that exposing a battery to 25 kHz current at any significant amplitude causes damage to the battery, so similarly it can expected that exposing the hybrid supercapacitor to a resonant circuit is not an option as it can potentially damage the hybrid supercapacitor cell due to electrode exfoliation and electrolyte breakdown by high frequency friction. Adding an external battery heater adds weight and takes up space, and sometimes this is undesirable. Other prior attempts to heat the battery do not warm the cells uniformly and can therefore risk damage to particular cells. Relevant prior art is also disclosed in the documents JP 2008 108509 A, US 2016/268058 A1 and DE 38 07 633 A1.

### Summary

According to the present invention, an energy storage device as claimed in claim 1 is provided. According to the present invention, a method for controlling an energy storage device as claimed in claim 4 is provided.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments are described with reference to the following drawings, in which:
Fig. 1A shows an energy storage device according to various embodiments;
Fig. 1B shows an energy storage device according to various embodiments;
Fig. 1C shows a flow diagram illustrating a method for controlling an energy storage device according to various embodiments; and
FIG. 2 shows a thermoelectric module with a plurality of thermoelectric cells 202 according to various embodiments.

### Description

According to various embodiments, devices and methods for self-heating of energy storage devices by use of thermoelectric modules (in other words: thermoelectric elements; in other words: thermoelectric circuits) may be provided.

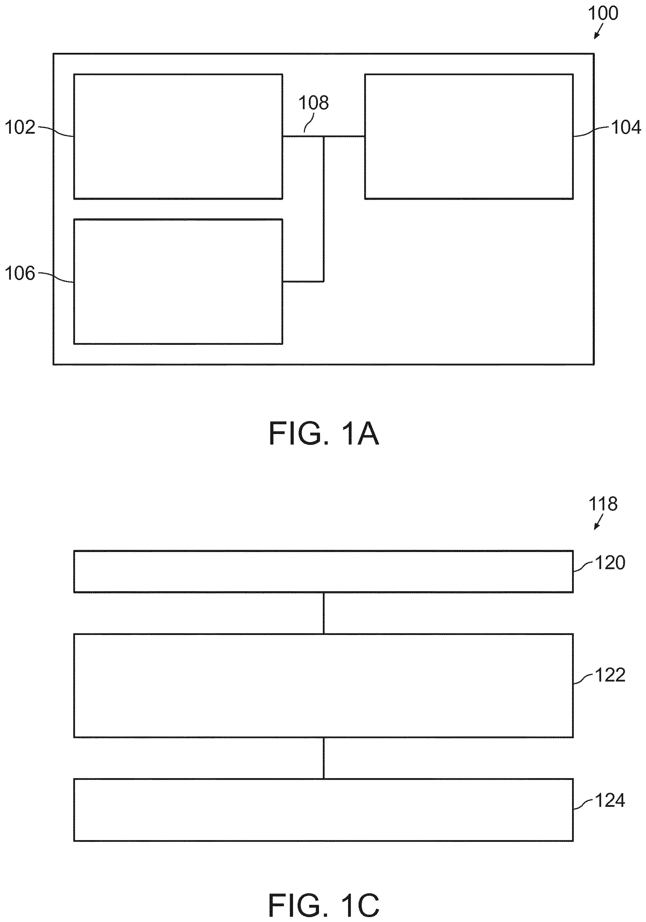

Fig. 1A shows an energy storage device 100 according to various embodiments. The energy storage device 100 includes a battery 102. The energy storage device 100 further includes a thermoelectric circuit 104 provided in a proximity of an engine of a car and configured to generate a voltage based on a temperature difference. The energy storage device 100 further includes a heating circuit 106 configured to heat the battery 102 based on the voltage generated by the thermoelectric circuit 104. The battery 102, the thermoelectric circuit 104, and the heating circuit 106 may be coupled with each other, like indicated by lines 108, for example electrically coupled, for example using a line or a cable, and/ or mechanically coupled.

In other words, in an energy storage device 100, a thermoelectric circuit 104 is provided in a proximity of an engine of a car and provides energy for heating a battery 102.

According to various embodiments, the temperature difference may include or may be a difference between a temperature in the proximity of the engine and a temperature in an environment of the car.

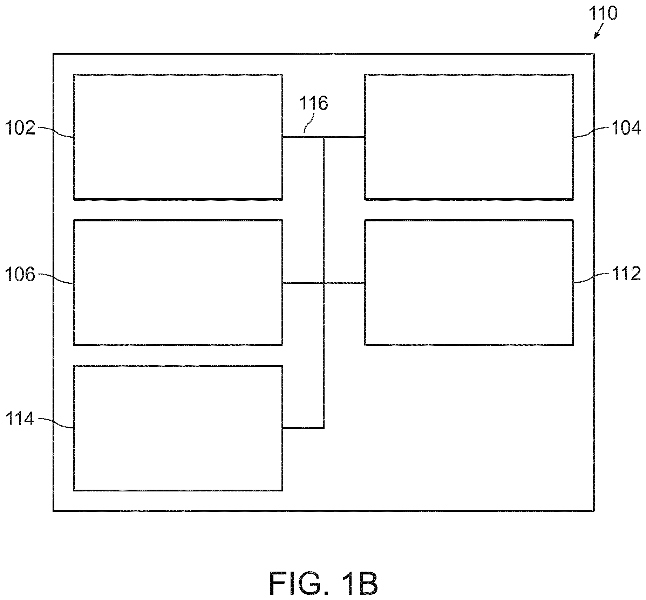

Fig. 1B shows an energy storage device 110 according to various embodiments. The energy storage device 110 includes, similar to the energy storage device 100 shown in FIG. 1A, a battery 102. The energy storage device 110 includes, similar to the energy storage device 100 shown in FIG. 1A, further a thermoelectric circuit 104 provided in a proximity of an engine of a car and configured to generate a voltage based on a temperature difference. The energy storage device 110 includes, similar to the energy storage device 100 shown in FIG. 1A, further a heating circuit 106 configured to heat the battery 102 based on the voltage generated by the thermoelectric circuit 104. The energy storage device 110 further includes a hybrid supercapacitor 112, like will be described in more detail below. The energy storage device 110 may further include a recuperation circuit 114, like will be described in more detail below. The battery 102, the thermoelectric circuit 104, the heating circuit 106, the hybrid supercapacitor 112, and the recuperation circuit 114 may be coupled with each other, like indicated by lines 116, for example electrically coupled, for example using a line or a cable, and/ or mechanically coupled.

According to the invention as claimed in the appended claims, the thermoelectric circuit 104 is provided as a housing of the hybrid supercapacitor 112.

According to various embodiments, the recuperation circuit 114 may be configured to charge the battery 102 when the car is braking (or when the car is decelerating).

Fig. 1C shows a flow diagram 118 illustrating a method for controlling an energy storage device according to various embodiments. In 120, a battery is controlled. In 122, a thermoelectric circuit provided in a proximity of an engine of a car is controlled to generate a voltage based on a temperature difference. In 124, the battery is heated based on the voltage generated by the thermoelectric circuit.

According to various embodiments, the temperature difference may include or may be a difference between a temperature in the proximity of the engine and a temperature in an environment of the car.

According to various embodiments, the method further includes controlling a hybrid supercapacitor.

According to various embodiments, the thermoelectric circuit is provided as a housing of the hybrid supercapacitor.

According to various embodiments, the method may further include controlling a recuperation circuit to charge the battery when the car is braking.

The temperature difference (ΔT) between a car engine compartment and an external ambient may be substantial, for example about 90K. Various embodiments may tap on the temperature difference between the temperature at a car engine and an ambient temperature to harvest energy. This energy may be fed back to a battery to power a heating coil around a HSC (hybrid supercapacitor) cell when engine is stopped.

The thermoelectric module may receive energy from harvesting the temperature difference between ambient and the car engine compartment and in turn energize the power storage device. Energy harvested may be converted into DC power by energizing the power storage device in the car. The thermoelectric module may be connected to the power storage devices and electrically connected to a circuitry and a switch for selectively electrically connecting the power storage devices to power up the heating coil running around the supercapacitor electrolyte bank when the vehicle engine temperature drops below room temperature. The thermoelectric generator may be electrically coupled to circuits for converting electrical energy to specific needs, and in this case, it may be used for providing resistive heating for electrolytes in supercapacitors.

According to the invention as claimed in the appended claims, an active combination of a hybrid supercapacitor and a battery is provided. Hybrid supercapacitors may charge and discharge more quickly than batteries. The energy harvested from the thermoelectric module may best be stored in the battery. When a car (for example an electric vehicle (EV) or a battery-EV) faces prolonged exposure to cold climatic conditions, the car may have a hybrid supercapacitor temperature equilibrated (in other words: at least substantially identical) to the ambient temperature, for example -15 degrees Celsius. In order to maintain a constant temperature in the hybrid supercapacitor, some of the electricity stored in the battery may be used to cycle some of the energy in progressively increasing temperature to self heat the hybrid supercapacitor module. The battery heats up the electrolyte in the hybrid supercapacitor according to power dissipation via resistive heating. The process of heating may be carried out by passing current in one direction. Once the temperature of the electrolyte has achieved an optimum operating temperature, this discharge of electricity for resistive heating may stop. Initially, the current passed between the battery and capacitor may need to be a small current because the cold hybrid supercapacitor module cannot tolerate higher currents in the cycling. As the hybrid supercapacitor slowly warms up, the current passed may be greater and eventually the energy storage system may be as warm as desired, and heating may cease once the optimum operating temperature is achieved.

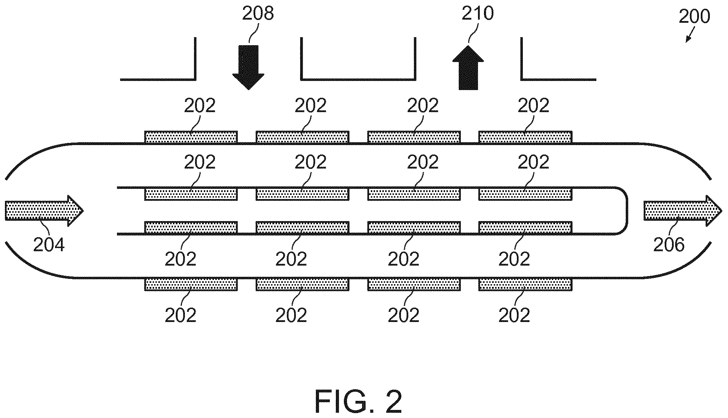

FIG. 2 shows a thermoelectric module 200 with a plurality of thermoelectric cells 202 according to various embodiments. Airflow from an engine compartment may be provided to the thermoelectric module 200, like indicated by arrow 204. Airflow from the thermoelectric module 200 to a radiator may be provided, like indicated by arrow 206. Flow may be provided from a radiator (like indicated by arrow 208) and to a radiator (like indicated by arrow 210). Radiators are heat exchangers used for cooling internal combustion engines, mainly in automobiles but also in piston-engined aircrafts, railway locomotives, motorcycles, stationary generating plant or any similar use of such an engine. The radiator transfers the heat from the fluid inside to the air outside, thereby cooling the fluid, which in turn cools the engine. This heat from the radiator will then be absorbed by for example the thermoelectric cells in the thermoelectric module.

According to various embodiments, a thermoelectric module may be provided in a car engine compartment.

According to the invention as claimed in the appended claims, a self-heating system for energy storage devices includes: a thermoelectric module for heating a storage device, the thermoelectric module being operated based on a temperature difference.

According to various embodiments, the temperature difference may be the difference between an ambient temperature and a vehicle engine temperature.

According to various embodiments, a battery may be powered by the thermoelectric module based on the temperature difference.

According to the invention as claimed in the appended claims, the battery heats up the power storage device via resistive heating.

According to the invention as claimed in the appended claims, the power storage device includes a hybrid supercapacitor (HSC).

According to the invention as claimed in the appended claims, a thermoelectric layer is utilized as a housing to a hybrid supercapacitor cell. As such, the temperature difference is harvested to produce electric flow to the cells to automatically heat up the cells without any requirement for additional heat sources.

Various embodiments may provide keeping a battery warm enough to carry out its functions, so that it could (for example) receive regenerative- braking energy from the outset of vehicle operation rather than having to wait for the vehicle to warm up. Various embodiments may not need adding weight to the equipment, and may not have to take up space for added equipment. Various embodiments may not add physical complexity to the system beyond whatever is already there to serve existing functions. According to various embodiments, the warming activity may be more nearly targeted to the location of the need, thereby minimizing the problem of heat going in directions that don't help.

Various embodiments may be applied in any kinds of vehicles, including military vehicles of all types (including the specific case of military ground vehicle cold cranking aids), in aircraft, and in satellites. It will be understood that the current cycling will no longer work if the hybrid supercapacitor electrolyte freezes (for example at -60 degrees Celsius for one commonly employed hybrid supercapacitor electrolyte). So if the application happens to be in some electronic unit that is subjected to -60 degrees C, then a different electrolyte (having a lower freezing point) may be used in the hybrid supercapacitor. If the hybrid supercapacitor freezes, then later when the hybrid supercapacitor thaws, the current cycling may again be employed.

Various embodiments do not draw additional energy sources from battery or hybrid supercapacitor and may tap on waste heat to power devices.

Various embodiments may tap on converting heat loss from engine radiator (which accounts for 58-62%) to useful energy to maintain the hybrid supercapacitor at a pre-set temperature.

According to various embodiments, reliability may be increased and material costs may be decreased, as materials according to various embodiments do not need constant replacement.

While the invention has been particularly shown and described with reference to specific embodiments, it should be understood by those skilled in the art that various changes in form and detail may be made therein without departing from the scope of the invention as defined by the appended claims. The scope of the invention is thus indicated by the appended claims and all changes which come within the meaning and range of equivalency of the claims are therefore intended to be embraced.

## Claims

1. An energy storage device (100, 110), comprising
a battery (102);
a thermoelectric circuit (104) provided in a proximity of an engine of a car and configured to generate a voltage based on a temperature difference; and
a heating circuit (106) configured to heat the battery (102) based on the voltage generated by the thermoelectric circuit (104);
**characterized in that**
the energy storage device (100, 110) further comprises a hybrid supercapacitor (112),
wherein the thermoelectric circuit (104) is provided as a housing of the hybrid supercapacitor (112),
whereat the battery (102) is configured to heat up the electrolyte in the hybrid supercapacitor (112) according to power dissipation via resistive heating.

2. The energy storage device (100, 110) of claim 1,
wherein the temperature difference comprises a difference between a temperature in the proximity of the engine and a temperature in an environment of the car.

3. The energy storage device (100, 110) of any one of claims 1 to 2, further comprising:
a recuperation circuit (114) configured to charge the battery (102) when the car is braking.

4. A method for controlling an energy storage device (100, 110), the method comprising controlling a battery (102);
controlling a thermoelectric circuit (104) provided in a proximity of an engine of a car to generate a voltage based on a temperature difference; and
heating the battery (102) based on the voltage generated by the thermoelectric circuit (104);
**characterized in that**
the method further comprises controlling a hybrid supercapacitor (112),
wherein the thermoelectric circuit (104) is provided as a housing of the hybrid supercapacitor (112),
whereat the battery (102) heats up the electrolyte in the hybrid supercapacitor (112) according to power dissipation via resistive heating.

5. The method of claim 4,
wherein the temperature difference comprises a difference between a temperature in the proximity of the engine and a temperature in an environment of the car.

6. The method of any one of claims 4 to 5, further comprising:
controlling a recuperation circuit to charge the battery (102) when the car is braking.

## Patentansprüche

1. Energiespeichervorrichtung (100, 110), die Folgendes umfasst:
eine Batterie (102);
eine thermoelektrische Schaltung (104), bereitgestellt in einer Nähe einer Kraftmaschine eines Fahrzeugs und ausgelegt zum Erzeugen einer Spannung basierend auf einer Temperaturdifferenz; und
eine Heizschaltung (106), ausgelegt zum Heizen der Batterie (102) basierend auf der durch die thermoelektrische Schaltung (104) erzeugten Spannung;
**dadurch gekennzeichnet, dass**
die Energiespeichervorrichtung (100, 110) ferner einen Hybrid-Superkondensator (112) umfasst, wobei die thermoelektrische Schaltung (104) als ein Gehäuse des Hybrid-Superkondensators (112) bereitgestellt ist,
wobei die Batterie (102) ausgelegt ist zum Aufheizen des Elektrolyts im Hybrid-Superkondensator (112) entsprechend einer Leistungsableitung durch Widerstandsheizung.

2. Energiespeichervorrichtung (100, 110) nach Anspruch 1,
wobei die Temperaturdifferenz eine Differenz zwischen einer Temperatur in der Nähe der Kraftmaschine und einer Temperatur in der Umgebung des Fahrzeugs umfasst.

3. Energiespeichervorrichtung (100, 110) nach einem der Ansprüche 1 bis 2, die ferner Folgendes umfasst:
eine Rückgewinnungsschaltung (114), ausgelegt zum Laden der Batterie (102), wenn das Fahrzeug bremst.

4. Verfahren zum Steuern einer Energiespeichervorrichtung (100, 110), wobei das Verfahren Steuern einer Batterie (102) umfasst;
Steuern einer thermoelektrischen Schaltung (104), bereitgestellt in einer Nähe einer Kraftmaschine eines Fahrzeugs zum Erzeugen einer Spannung basierend auf einer Temperaturdifferenz; und
Heizen der Batterie (102) basierend auf der durch die thermoelektrische Schaltung (104) erzeugten Spannung; **dadurch gekennzeichnet, dass**
das Verfahren ferner Steuern des Hybrid-Superkondensators (112) umfasst,
wobei die thermoelektrische Schaltung (104) als ein Gehäuse des Hybrid-Superkondensators (112) bereitgestellt ist,
wobei die Batterie (102) den Elektrolyt im Hybrid-Superkondensator (112) entsprechend einer Leistungsableitung durch Widerstandsheizung aufheizt.

5. Verfahren nach Anspruch 4,
wobei die Temperaturdifferenz eine Differenz zwischen einer Temperatur in der Nähe der Kraftmaschine und einer Temperatur in der Umgebung des Fahrzeugs umfasst.

6. Verfahren nach einem der Ansprüche 4 bis 5, das ferner Folgendes aufweist:
Steuern einer Rückgewinnungsschaltung zum Laden der Batterie (102), wenn das Fahrzeug bremst.

## Revendications

1. Dispositif d'accumulation d'énergie (100, 110) comprenant
une batterie (102) ;
un circuit thermoélectrique (104) fourni à proximité d'un moteur d'une voiture et conçu pour générer une tension sur la base d'une différence de température ; et
un circuit de chauffage (106) conçu pour chauffer la batterie (102) sur la base de la tension générée par le circuit thermoélectrique (104) ;
**caractérisé en ce que**
le dispositif d'accumulation d'énergie (100, 110) comprend en outre un supercondensateur hybride (112),
le circuit thermoélectrique (104) étant fourni comme un logement du supercondensateur hybride (112),
la batterie (102) étant conçue pour chauffer l'électrolyte dans le supercondensateur hybride (112) en fonction de la dissipation de puissance par l'intermédiaire d'un chauffage résistif.

2. Dispositif d'accumulation d'énergie (100, 110) selon la revendication 1,
la différence de température comprenant une différence entre une température à proximité du moteur et une température dans un environnement de la voiture.

3. Dispositif d'accumulation d'énergie (100, 110) selon l'une quelconque des revendications 1 et 2, comprenant en outre :
un circuit de récupération (114) conçu pour charger la batterie (102) lorsque la voiture freine.

4. Procédé de commande d'un dispositif d'accumulation d'énergie (100, 110), le procédé comprenant les étapes consistant à
commander une batterie (102) ;
commander un circuit thermoélectrique (104) fourni à proximité d'un moteur d'une voiture pour générer une tension sur la base d'une différence de température ; et
chauffer la batterie (102) sur la base de la tension générée par le circuit thermoélectrique (104) ;
**caractérisé en ce que**
le procédé comprend en outre l'étape consistant à commander un supercondensateur hybride (112),
le circuit thermoélectrique (104) étant fourni comme un logement du supercondensateur hybride (112),
la batterie (102) chauffant l'électrolyte dans le supercondensateur hybride (112) en fonction de la dissipation de puissance par l'intermédiaire d'un chauffage résistif.

5. Procédé selon la revendication 4,
la différence de température comprenant une différence entre une température à proximité du moteur et une température dans un environnement de la voiture.

6. Procédé selon l'une quelconque des revendications 4 et 5, comprenant en outre l'étape consistant à :
commander un circuit de récupération pour charger la batterie (102) lorsque la voiture freine.
